Europäisches Patentamt

European Patent Office

Office européen des brevets

(11) Veröffentlichungsnummer: **0 445 775 A2**

## EUROPÄISCHE PATENTANMELDUNG

(21) Anmeldenummer: 91103413.0

(22) Anmeldetag: 06.03.91

(51) Int. Cl.5: **H02M 3/335**

(30) Priorität: 09.03.90 DE 4007592

(43) Veröffentlichungstag der Anmeldung:
**11.09.91 Patentblatt 91/37**

(84) Benannte Vertragsstaaten:
**AT BE CH DE ES FR GB IT LI NL SE**

(71) Anmelder: **Siemens Nixdorf
Informationssysteme AG
Otto-Hahn-Ring 6
W-8000 München 83(DE)**

(72) Erfinder: **Rettenmaier, Helmut, Dipl.-Ing.
Buchenstrasse 16
W-8934 Grossaitingen(DE)**
Erfinder: **Busch, Peter, Dipl.-Ing.
Flugfeldstrasse 16
W-8900 Augsburg(DE)**

(74) Vertreter: **Fuchs, Franz-Josef, Dr.-Ing. et al
Postfach 22 13 17
W-8000 München 22(DE)**

(54) Eingangsstromspitzen vermeidendes Schaltnetzteil mit sinusänlicher Stromaufnahme.

(57) Zur Vermeidung von Eingangsstromspitzen beim Einstecken bzw. Einschalten des Schaltnetzteils oder beim Nachladen des Schaltnetzteils nach einem Ausfall der Eingangsnetzwechselspannung (AC) oder nach einem Einbruch derselben während des Betriebs, wird der Eingangskondensator (CE) auf den Ausgang des Schaltnetzteils verlegt. Gleichzeitig wird ein an sich bekannter, in Abhängigkeit vom Augenblicks wert der dem Schaltnetzteil zugeführten sinusförmigen Eingangsnetzwechselspannung schnell getakteter Spannungsregler (SPR) verwendet, der nach dem Tiefsetzsteller-Prinzip arbeitet und so ausgebildet ist, daß eine sinusähnliche Eingangsstromaufnahme erzwungen wird, daß eine aktive Strombegrenzung stattfindet und daß zwischen dessen Eingang und Ausgang eine Netztrennung besteht.

# FIG 1

Die Erfindung betrifft ein Eingangsstromspitzen vermeidendes Schaltnetzteil mit sinusähnlicher Stromaufnahme gemäß den Merkmalen des Oberbegriffs des Anspruchs 1.

Durch den dem Eingangsnetzgleichrichter nachgeschalteten Eingangskondensator eines Schaltnetzteils können sehr hohe Eingangsstromspitzen auftreten, da im Betrieb über den Eingangsnetzgleichrichter nur im Bereich der Eingangsscheitelspannung Nachladeströme fließen. Als Folge davon wird der Leistungsfaktor des Schaltnetzteils auf einen Wert von größenordnungsmäßig 0,4 bis 0,7 gedrückt. Ein weiteres Problem ist der plötzliche hohe Ladestrom beim Einstecken bzw. Einschalten des Schaltnetzteils bzw. beim Nachladen nach einem Ausfall der Eingangsnetzwechselspannung bzw. nach einem Einbruch derselben während des Betriebs des Schaltnetzteils. Je sinusähnlicher der Eingangsstrom des Schaltnetzteils ist, umso besser ist dessen Leistungsfaktor.

Zur Verbesserung des Leistungsfaktors wurden entweder schwere und teure Eingangsdrosseln verwendet oder eine aktive Oberwellenfilterung durch vorgeschaltete Hochsetzsteller mit einer Stromsteuerung über Multiplizierer durchgeführt. Der Nachteil ist, daß trotz des hohen Aufwandes keine Netztrennung gegeben ist und daß die Eingangsstromspitzen beim Einstecken bzw. Einschalten des Schaltnetzteils immer noch vorhanden sind. Um diese zu reduzieren, werden Heißleiter als Vorwiderstände oder Vorwiderstände, die im Betrieb durch z.B. Triac-Bauteile oder Relais-Kontakte überbrückt sind, verwendet. Bei kurzen Netzeinbrüchen sind diese jedoch wirkungslos.

Zur Vermeidung der hohen Eingangsstromspitzen wurden auch sogenannte Null-Spannungsschalter entwickelt, die aber ebenfalls sehr aufwendig sind.

Aus dem amerikanischen Patentdokument US 4 472 672 ist eine schaltgeregelte Ladeschaltung für Batterien bekannt, die einen erhöhten Leistungsfaktor aufweist. Die Erhöhung des Leistungsfaktors wird dadurch erzielt, daß die Schaltphasen des verwendeten Schalttransistors sinusförmig geregelt und dadurch der Eingangsstrom und die Eingangsspannung angenähert in Phase gehalten werden. Ein Nachteil der Ladeschaltung ist jedoch, daß sie durch die Verwendung einer Filterschaltung nach dem Eingangsnetzgleichrichter zur Begrenzung von Spannungsspitzen aufwendig ist. Außerdem ist die Ladeschaltung nicht netztrennend ausgebildet. Sie erfüllt somit einschlägige Sicherheitsvorschriften nicht.

Aufgabe der Erfindung ist es deshalb, ein Schaltnetzteil der eingangs genannten Art anzugeben, das Eingangsstromspitzen vermeidet, mit wenig Aufwand hergestellt werden kann, einen erhöhten Leistungsfaktor aufweist und darüberhinaus netztrennend ist.

Diese Aufgabe wird bei einem Schaltnetzteil der eingangs genannten Art jeweils durch die Merkmale der kennzeichnenden Teile der Ansprüche 1 bis 4 gelöst. Derartige Schaltnetzteile weisen folgende Vorteile auf: Keine Eingangsstromspitzen; das Schaltnetzteil ist netztrennend; der Eingangsstrom ist sinusähnlich, weshalb der Leistungsfaktor des Geräts wesentlich verbessert ist, und der Mittelwert der Ausgangsgleichspannung ist unabhängig von der angeschlossenen Last und der Eingangsnetzwechselspannung. Weitere Vorteile sind, daß durch den konkreten Wegfall eines Bauteils das Schaltnetzteil billiger wird und daß das Schaltnetzteil mit geringeren Abmessungen konstruiert werden kann. Da es sich bei den Eingangskondensatoren meist um relativ große Bauteile handelt, wird selbst dann Platz eingespart, wenn die Ausgangskondensatoren, die in der Regel bereits vorhanden sind, in einer vergrößerten Version eingesetzt werden.

Nachfolgend werden Ausführungsbeispiele der Erfindung anhand der Zeichnung näher erläutert. Dabei zeigen:

FIG 1        ein Prinzipschaltbild eines Schaltnetzteils mit sinusähnlicher Stromaufnahme gemäß der Erfindung,

FIG 2 - 5    Prinzipschaltungen von Tiefsetzstellern für einen Spannungsregler nach FIG 1,

FIG 6        einen qualitativen Stromverlauf des Eingangsstroms eines Schaltnetzteils nach FIG 1 und

FIG 7        eine Tafel mit den Tastverhältnissen der Schalter der als Spannungsregler eingesetzten Tiefsetzsteller gemäß der FIG 2 - 5.

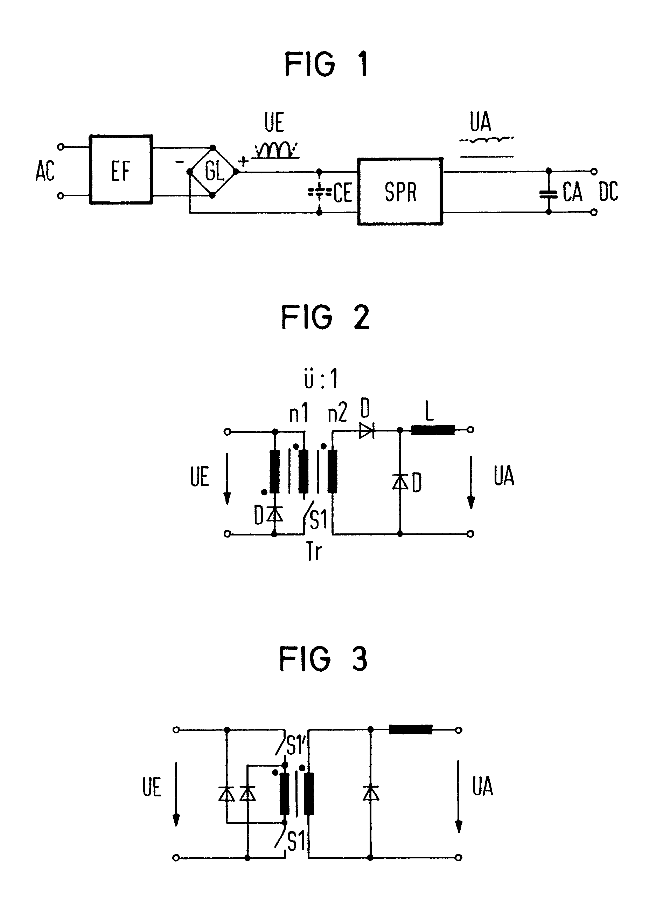

Das in der FIG 1 dargestellte Schaltnetzteil weist ein Eingangsfilter EF, daran angeschlossen einen Eingangsnetzgleichrichter GL, an diesen angeschlossen einen Spannungsregler SPR und diesem wiederum nachfolgend einen Ausgangskondensator CA auf. Das Schaltnetzteil ist an eine Eingangsnetzwechselspannung AC angeschlossen, aus der die stabilisierte Ausgangsgleichspannung DC gewonnen wird.

Die Eingangsnetzwechselspannung AC kann beispielsweise Scheitelwerte von ca. 120 bis 370 Volt annehmen. Gemäß dem Ausführungsbeispiel wird nur eine Ausgangsgleichspannung DC, z.B. 12 Volt, ausgegeben. Sollen gleichzeitig mehrere Ausgangsgleichspannungen ausgegeben werden, sind entsprechende Ausgangskreise innerhalb des Spannungsreglers SPR vorzusehen.

Das Eingangsfilter EF filtert Störungen der Eingangsnetzwechselspannung AC und des Schaltnetzteils heraus. Der Eingangsnetzgleichrichter GL richtet die Eingangsnetzwechselspannung AC gleich und erzeugt unter der Annahme, daß ein Zweiweggleichrichter verwendet wird, eine pulsierende Eingangsgleichspannung UE, wie sie in der FIG skizzenhaft angedeutet ist. Der Spannungsregler SPR regelt die Eingangsgleichspannung UE zu einer geregelten Ausgangsgleichspannung UA entsprechend einem vorgegebenen Mittelwert. Der Verlauf der Ausgangsgleichspannung UA ist in der FIG skizzenhaft angegeben. Die Ausgangsgleichspannung UA weist systembedingt noch eine Restwelligkeit auf. Der Ausgangskondensator CA reduziert die Größe der Restwelligkeit. Durch Vergrößern des Ausgangskondensators CA kann die Restwelligkeit verkleinert werden. Ein Vorteil des Vergrößerns des Ausgangskondensators CA liegt ferner darin, daß bei Ausfall der Eingangsnetzwechselspannung AC die Ausgangsgleichspannung DC länger nutzbringend am Ausgangskondensator CA abgegriffen werden kann.

Bei dem Spannungsregler SPR handelt es sich um einen nach dem Tiefsetzsteller-Prinzip arbeitenden DC/DC-Wandler, der in Abhängigkeit vom Augenblickswert der dem Schaltnetzteil zugeführten sinusförmigen Eingangsnetzwechselspannung schnell getaktet und so ausgebildet ist, daß eine proportional zur Eingangsspannung geregelte Stromaufnahme und eine aktive Strombegrenzung durch Begrenzung des Regelbereichs stattfindet und zwischen dessen Eingang und Ausgang eine Netztrennung besteht. Spannungsregler, die für eine solche Anwendung geeignet sind, sind an sich bekannt. Vom Prinzip her könnte es sich beispielsweise um einen 1-Transistor-Eintakt- , einen 2-Transistor-Eintakt-, einen Gegentakt- oder um einen stromgespeisten Gegentaktdurchflußwandler handeln. Die Taktfrequenz ist sehr viel größer als die Wechselfrequenz der sinusförmigen Eingangsnetzwechselspannung AC. Sie beträgt für das Ausführungsbeispiel 50 kHz.

Gegenüber bekannten Schaltnetzteilen ist kein Eingangskondensator CE zwischen dem Eingangsnetzgleichrichter GL und dem Spannungsregler SPR vorgesehen, weshalb dieser in der FIG nur gestrichelt gezeichnet ist. Der die unerwünschten Eingangsstromspitzen verursachende Eingangskondensator CE ist auf den Ausgang des Schaltnetzteils verlegt. Im Ausführungsbeispiel treten deshalb beim Laden bzw. Nachladen des Ausgangskondensators CA wegen der entsprechenden Steuerung des Eingangsstroms im Spannungsregler SPR keine Eingangsstromspitzen mehr auf. Dadurch wird auch der Leistungsfaktor des Schaltnetzteils verbessert.

Aus Gründen des Kompromisses, der zwischen der Größe des Ausgangskondensators CA zur Reduzierung der Restwelligkeit auf der Ausgangsgleichspannung DC und der Möglichkeit der Aufrechthaltung der Ausgangsgleichspannung DC bei Ausfall der Eingangsnetzwechselspannung AC bzw. bei deren Einbruch zu schließen ist, wird die Ausgangsgleichspannung DC noch eine, wenn auch geringe, Restwelligkeit aufweisen, doch spielt dies für viele Anwendungsfälle keine Rolle. Solche Anwendungsfälle sind z.B. die Betreibung von Halogenlampen, von Motoren, von Ladegeräten, von Leistungsendstufen, aber auch die Verwendung als Eingangsteil für batteriegepufferte Stromversorgungen für Datenverarbeitungsanlagen.

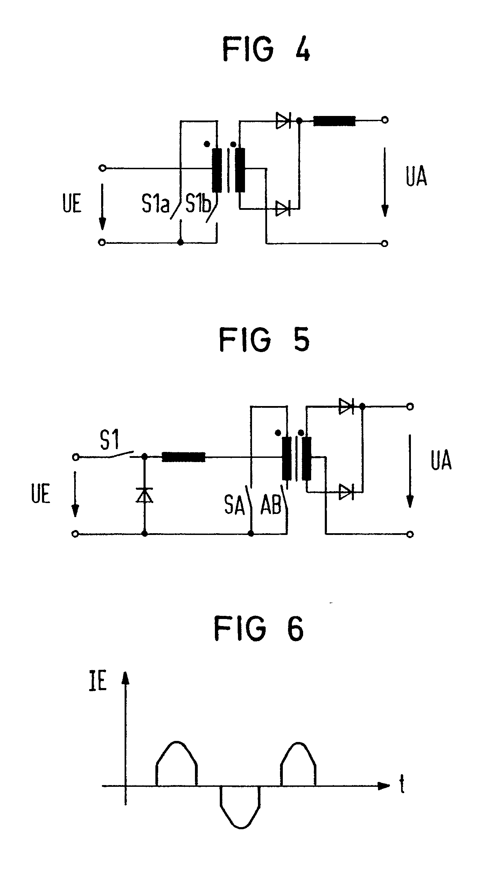

In den FIG 2 bis FIG 5 sind Prinzipschaltungen eines Durchflußwandlers für den in FIG 1 als Spannungsregler eingesetzten Tiefsetzsteller angegeben. Bei der in FIG 2 dargestellten Prinzipschaltung handelt es sich dabei um einen 1-Transistor-Eintaktdurchflußwandler mit einem getakteten Schalter S1. Die in FIG 3 dargestellten Prinzipschaltung zeigt einen 2-Transistor-Eintaktdurchflußwandler mit zwei getakteten Schaltern S1 und S1'. Bei der in FIG 4 dargestellten Prinzipschaltung handelt es sich um einen Gegentaktdurchflußwandler mit zwei getakteten Schaltern S1a und S1b. Bei der in FIG 5 dargestellten Prinzipschaltung schließlich handelt es sich um einen stromgespeisten Gegentaktdurchflußwandler mit drei getakteten Schaltern S1, SA und SB. Alle Prinzipschaltungen sind an sich bekannt (siehe beispielsweise ELEKTRONIK 1978, Heft 4, Seiten 102 - 104).

Die einzelnen Durchflußwandler weisen neben den genannten Schaltern noch jeweils Dioden D, Übertrager Tr und Drosseln L auf, die der Einfachheit halber nur in FIG 2 näher bezeichnet sind. Da eine sehr hohe Taktfrequenz der Schalter 5 verwendet ist, weisen die Übertrager kleine Abmessungen auf.

Allgemein errechnet sich die Ausgangsspannung UA der Durchflußwandler aus der Formel:

$$UA = UE \cdot 1/\ddot{u} \cdot v_T$$

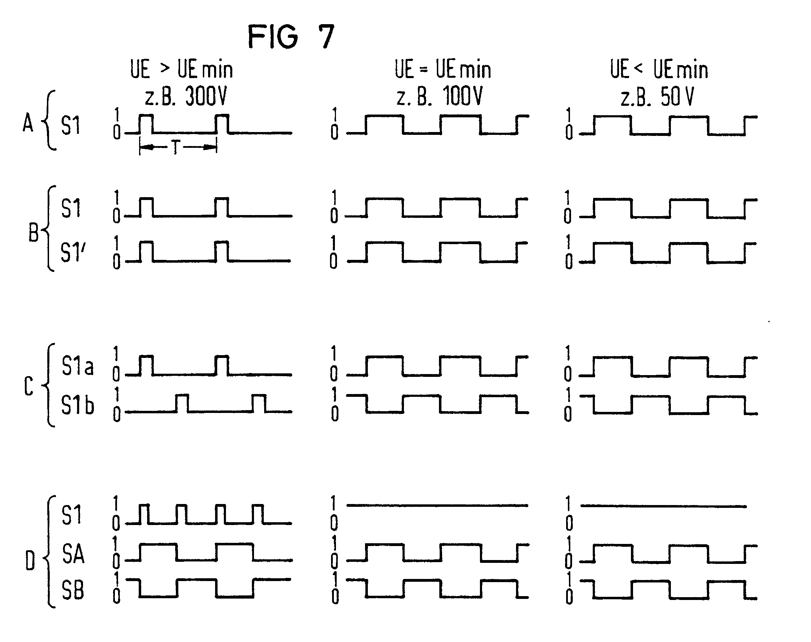

UE ist die Eingangsspannung des Spannungsreglers SPR bzw. des darin enthaltenen Tiefsetzstellers. ü ist das Übersetzungsverhältnis des Übertragers Tr, das sich aus dem Verhältnis der Windungszahlen n1 und n2 der Wicklungen des Übertragers ergibt. $v_T$ schließlich ist das Tastverhältnis der getakteten Schalter S, das das Zeitverhältnis zwischen offenem und geschlossenem Zustand eines Schalters während einer Periodendauer T (FIG 7) angibt. $V_{Tmax}$ hängt vom Auf- und Abmagnetisierungsverhalten des Übertragers Tr ab und kann Werte von 50 bis 100% annehmen.

Unter der Annahme, daß die Ausgangsspannung UA konstant ist, ergibt sich bei einem maximalen Tastverhältnis $v_{Tmax}$ eine minimale Eingangsspannung UEmin für den jeweiligen Tiefsetzsteller gemäß der Formel:

$$UEmin = UA \cdot ü/v_{Tmax}$$

Die minimale Eingangsspannung UEmin ist diejenige Eingangsspannung, bei der der Tiefsetzsteller gerade noch als solcher arbeitet. Das heißt, daß unterhalb der minimalen Eingangsspannung UEmin kein Eingangsstrom fließt. Bei entsprechender Steuerung der Schalter S, die im Zusammenhang mit der FIG 7 näher erläutert wird, fließt ein sinusähnlicher Eingangsstrom IE, wie er qualitativ in der FIG 6 angegeben ist.

In FIG 7 sind für die verschiedenen Tiefsetzstellertypen gemäß der FIG 2 bis FIG 5, die hier den Fällen A bis D zugeordnet sind, die Tastverhältnisse der jeweiligen Schalter S für vier Augenblickswerte der Eingangsspannung UE dargestellt. Die vier Augenblickswerte sind z.B. 300 V, die aus einem Eingangsspannungsbereich von UE UEmin herausgegriffen ist; 100 V, die beispielsweise eine Eingangsspannung UE angibt, die der minimalen Eingangsspannung UEmin entspricht; 50 V, die aus einem Spannungsbereich UE UEmin herausgegriffen ist und schließlich 5 V, die eine Eingangsspannung UE nahe 0V angibt. Den jeweils an den linken Seiten der Kurven angegebenen Bezeichnungen 1 und 0 sind folgende Bedeutungen zugeordnet:

1: der betreffende Schalter ist eingeschaltet

0: der betreffende Schalter ist ausgeschaltet.

Die Tastverhältnisse ändern sich mit den Augenblickswerten der Eingangsspannung UE entsprechend stufenlos. Da die Eingangsspannung UE die gleichgerichtete Eingangsnetzwechselspannung AC ist, ändert sich die Eingangsspannung UE entsprechend der Änderung der Augenblickswerte der sinusförmigen Eingangsnetzwechselspannung AC. Qualitativ werden deshalb die Tastverhältnisse der betreffenden Schalter S entsprechend der Eingangsnetzwechselspannung AC geändert.

Im Einzelnen erfolgt eine solche Steuerung der Schalter S, daß sich für die verschiedenen Fälle A bis D folgende Tastverhältnisse für die betreffenden Schalter ergeben. Für die Betrachtung der Tastverhältnisse wird angenommen, daß sich die Eingangsspannung von einem vorgegebenen Scheitelwert ausgehend bis zu dem Wert 0 ändert. Es wird also nur eine Sinusviertelwelle betrachtet. Für die übrigen Sinusviertelwellen gilt Entsprechendes, wobei klar ist, daß bei einer Änderung der Eingangsspannung von 0 bis zu dem angesprochenen Scheitelwert sich die Tastverhältnisse entsprechend umgekehrt ändern. Es zeigen:

Fall A: Im Bereich oberhalb der minimalen Eingangsspannung UEmin erfolgt eine Änderung des Tastverhältnisses des Schalters S1 im Bereich von 0 bis $v_{Tmax}$ · $v_{Tmax}$ hängt von dem Windungsverhältnis der beiden Primärwicklungen ab. Im Ausführungsbeispiel ist $v_{Tmax}$ mit 50% gewählt. Im Bereich unterhalb der minimalen Eingangsspannung UEmin bleibt das Tastverhältnis mit $v_{Tmax}$ gleich.

Fall B: Die Schalter S1 und S1' werden synchron gesteuert. Für die Steuerung gilt gleiches wie für den Fall A, mit der Maßgabe, daß $v_{Tmax}$ = 50 % ist.

Fall C: Die Schalter S1a und S1b werden wechselweise nicht überlappend geschaltet. Dabei erfolgt im Bereich oberhalb der minimalen Eingangsspannung UEmin eine Änderung der Tastverhältnisse im Bereich von 0 bis 50 %. Im Bereich unterhalb der minimalen Eingangsspannung bleibt das Tastverhältnis mit 50 % gleich. Zur Berechnung der minimalen Eingangsspannung UEmin sind die Tastverhältnisse der beiden Schalter S1a und S1b zu addieren.

Fall D: Im Bereich oberhalb der minimalen Eingangsspannung UEmin erfolgt für den Schalter S1 eine Änderung des Tastverhältnisses im Bereich von 0 bis 100 %. Die Tastverhältnisse der Schalter SA und SB sind mit 50 % jeweils gleichbleibend, wobei die Schalter SA und SB zueinander wechselweise geschaltet sind. Der Schalter S1 schaltet jeweils mit einem der beiden wechselweise getakteten Schalter SA und SB. Im Bereich unterhalb der minimalen Eingangsspannung UEmin ist das Tastverhältnis des Schalters S1 mit 100 %, und die Tastverhältnisse der Schalter SA und SB mit 50 % gleichbleibend.

## Patentansprüche

1. Eingangsstromspitzen vermeidendes Schaltnetzteil mit sinusähnlicher Stromaufnahme, im wesentlichen bestehend aus einem Eingangsnetzgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter Tiefsetzsteller mit aktiver Strombegrenzung ausgebildet ist, und gegebenenfalls einem Ausgangskondensator (CA),
dadurch gekennzeichnet, daß anstelle eines zwischen dem Eingangsnetzgleichrichter (GL) und dem Spannungsregler (SPR) angeordneten Eingangskondensators (CE) und dem gegebenenfalls vorhandenen Ausgangskondensator (CA) nur ein gegebenenfalls vergrößerter Ausgangskondensator (CA) vorgesehen ist und daß der Tiefsetzsteller entsprechend dem Prinzip eines netztrennenden 1-Transistor-Eintaktdurchflußwandlers ausgebildet ist, der einen derart getakteten Schalter (S1) aufweist, daß sich gemäß der Änderung des Augenblickswertes der sinusförmigen Eingangsnetzwechselspannung (AC) von einer vorgegebenen Scheitelspannung aus bis zu einer minimalen Eingangsspannung (UEmin), bei der Tiefsetzsteller gerade noch als solcher arbeitet, entsprechend das dem Schalter (S1) zugeordnete Tastverhältnis im Bereich von 0 bis zu einem vorgegebenen maximalen Tastverhältnis ($v_{Tmax}$) ändert, während es bei einer Änderung des Augenblickswertes der sinusförmigen Eingangsnetzwechselspannung (AC) unterhalb der minimialen Eingangsspannung (UEmin) mit dem vorgegebenen maximalen Tastverhältnis ($v_{Tmax}$) gleich bleibt.

2. Eingangsstromspitzen vermeidendes Schaltnetzteil mit sinusähnlicher Stromaufnahme, im wesentlichen bestehend aus einem Eingangsnetzgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter Tiefsetzsteller mit aktiver Strombegrenzung ausgebildet ist, und gegebenenfalls einem Ausgangskondensator (CA),
**dadurch gekennzeichnet,** daß anstelle eines zwischen dem Eingangsnetzgleichrichter (GL) und dem Spannungsregler (SPR) angeordneten Eingangskondensators (CE) und dem gegebenenfalls vorhandenen Ausgangskondensator (CA) nur ein gegebenenfalls vergrößerter Ausgangskondensator (CA) vorgesehen ist und daß der Tiefsetzsteller entsprechend dem Prinzip eines netztrennenden 2-Transistor-Eintaktdurchflußwandlers ausgebildet ist, der zwei derart synchron getaktete Schalter (S1, S1') aufweist, daß sich gemäß der Änderung des Augenblickswertes der sinusförmigen Eingangsnetzwechselspannung (AC) von einer vorgegebenen Scheitelspannung aus bis zu einer minimalen Eingangsspannung (UEmin), bei der der Tiefsetzsteller gerade noch als solcher arbeitet, entsprechend die den einzelnen Schaltern (S1, S1') zugeordneten Tastverhältnisse jeweils im Bereich von 0 bis 50 % ändern, während sie bei einer Änderung des Augenblickswertes der sinusförmigen Eingangsnetzwechselspannung (AC) unterhalb der minimalen Eingangsspannung (UEmin) mit jeweils 50 % gleich bleiben.

3. Eingangsstromspitzen vermeidendes Schaltnetzteil mit sinusähnlicher Stromaufnahme, im wesentlichen bestehend aus einem Eingangsnetzgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter Tiefsetzsteller mit aktiver Strombegrenzung ausgebildet ist, und gegebenenfalls einem Ausgangskondensator (CA),
**dadurch gekennzeichnet,** daß anstelle eines zwischen dem Eingangsnetzgleichrichter (GL) und dem Spannungsregler (SPR) angeordneten Eingangskondensators (CE) und dem gegebenenfalls vorhandenen Ausgangskondensator (CA) nur ein gegebenenfalls vergrößerter Ausgangskondensator (CA) vorgesehen ist und daß der Tiefsetzsteller entsprechend dem Prinzip eines netztrennenden Gegentaktdurchflußwandlers ausgebildet ist, der zwei wechselweise derart getaktete Schalter (S1a, S1b) aufweist, daß sich gemäß der Änderung des Augenblickswertes der sinusförmigen Eingangsnetzwechselspannung (AC) von einer vorgegebenen Scheitelspannung aus bis zu einer minimalen Eingangsspannung (UEmin), bei der der Tiefsetzsteller gerade noch als solcher arbeitet, entsprechend die den Schaltern (S1a, S1b) zugeordneten Tastverhältnisse jeweils im Bereich von 0 bis 50 % ändern, während sie bei einer Änderung des Augenblickswertes der sinusförmigen Eingangsnetzwechselspannung (AC) unterhalb der minimalen Eingangsspannung (UEmin) mit jeweils 50 % gleich bleiben.

4. Eingangsstromspitzen vermeidendes Schaltnetzteil mit sinusähnlicher Stromaufnahme, im wesentlichen bestehend aus einem Eingangsnetzgleichrichter (GL), einem nachgeschalteten Spannungsregler (SPR), der als in Abhängigkeit vom Augenblickswert einer dem Schaltnetzteil zugeführten sinusförmigen Eingangsnetzwechselspannung (AC) schnell getakteter Tiefsetzsteller mit aktiver Strombegrenzung ausgebildet ist, und gegebenenfalls einem Ausgangskondensator (CA),
**dadurch gekennzeichnet,** daß anstelle eines zwischen dem Eingangsnetzgleichrichter (GL) und dem Spannungsregler (SPR) angeordneten Eingangskondensators (CE) und dem gegebenenfalls vorhandenen Ausgangskondensator (CA) nur ein gegebenenfalls vergrößerter Ausgangskondensator (CA) vorgesehen ist und daß der Tiefsetzsteller entsprechend dem Prinzip eines netztrennenden stromgespeisten Gegentaktdurchflußwandlers ausgebildet ist, der zwei unabhängig vom Augenblickswert der sinusförmigen Eingangsnetzwechselspannung (AC) wechselweise mit einem Tastverhältnis von jeweils 50 % getaktete Schalter (SA, SB) und einen dritten derart getakteten Schalter (S1) aufweist, daß der dritte Schalter (S1) mit jeweils einem der wechselweise getakteten Schaltern (SA, SB) schaltet und daß sich gemäß der Änderung des Augenblickswertes der sinusförmigen Eingangsnetzwechselspannung (AC) von einer vorgegebenen Scheitelspannung aus bis zu einer minimalen Eingangsspannung (UEmin), bei der der Tiefsetzsteller gerade noch als solcher arbeitet, entsprechend das dem Schalter (S1) zugeordnete Tastverhältnis im Bereich von 0 bis 100 % ändert, während es sich bei einer Änderung des Augenblickswertes der sinusförmigen Eingangsnetzwechselspannung (AC) unterhalb der minimalen Eingangsspannung (UEmin) mit 100 % gleich bleibt.

5.   Schaltnetzteil nach einem der Ansprüche 1 bis 4,
**dadurch gekennzeichnet,** daß die Taktfrequenz des Tiefsetzstellers sehr viel größer ist als die Wechselfrequenz der sinusförmigen Eingangsnetzwechselspannung (AC).

# FIG 1

# FIG 2

# FIG 3

# FIG 4

# FIG 5

# FIG 6

# FIG 7

EP 0 445 775 A2